# FASCICULE DE BREVET EUROPEEN

(11) **EP 0 904 917 B1**
(45) Date de publication et mention de la délivrance du brevet: **04.06.2003**
(21) Numéro de dépôt: 98402401.8
(22) Date de dépôt: 30.09.1998
(51) Int. Cl.: B29C 45/00, B60J 3/02

(54) **Procédé de fabrication d'un ensemble d'articulation de pare-soleil et pare-soleil obtenu selon ce procédé**
Verfahren zur Herstellung einer Gelenkanordnung einer Sonnenblende und nach diesem Verfahren erhaltene Sonnenblende
Method for manufacturing a joint assembly of a sun visor and sun visor obtained by this method

(30) Priorité: 30.09.1997 FR 9712114
(43) Date de publication de la demande: 31.03.1999
(73) Titulaire: Eurostyle (S.A.S.), 91370 Verrières le Buisson (FR)
(72) Inventeur: Boulbon, Jack, F-36130 Deols (FR)
(74) Mandataire: Viard, Jean

(56) Documents cités:
- DE-A- 2 420 264
- DE-A- 3 637 462
- DE-A- 3 942 937
- DE-A- 4 204 627
- FR-A- 2 724 343

## Description

La présente invention a pour objet un procédé de fabrication d'un ensemble d'articulation pour pare-soleil ainsi que les pare-soleil obtenus selon ce procédé.

Un pare-soleil est un écran généralement opaque pouvant pivoter, d'une part, autour d'un premier point d'articulation incluant généralement un axe de rotation et, d'autre part, autour d'un axe longitudinal afin de pouvoir prendre toutes les positions en vue de masquer le soleil et d'éviter l'éblouissement du conducteur et/ou de son passager. L'articulation de l'écran sur l'axe peut être réalisée par un ou plusieurs paliers.

Il existe de nombreux dispositifs d'articulation de pare-soleil qui comprennent un ensemble de pièces, parfois métalliques, nécessitant un assemblage fin et précis de pièces d'origines différentes ce qui implique un coût élevé.

Actuellement, le pare-soleil est monté sur une embase au moyen d'un axe ou bras coudé pivotant, l'embase étant fixée sur une traverse du véhicule. Cette embase est fixée par des vis, des attaches à baïonnette ou par encliquetage. Lorsque l'embase est fixée par encliquetage, elle est généralement constituée de plusieurs pièces comme décrit, par exemple dans US-A-4 989 911.

La présente invention a pour objet de pallier ces inconvénients et de permettre la réalisation des pièces nécessaires aux articulations d'un pare-soleil en une seule opération de moulage.

le document DE-A-3 942 937 présente un dispositif de fixation d'un pare-soleil et le procédé qui permet de le réaliser en injectant en premier lieu le bras coudé qui comporte une tête de rotule, puis en injectant la platine de fixation qui reçoit l'autre partie de la rotule.

Selon la présente invention, le procédé de fabrication d'un ensemble d'articulation d'un pare-soleil comprenant un axe coudé terminé par une rotule pivotant dans une embase, est caractérisé en ce qu'il consiste à mouler l'axe coudé et sa rotule en une première matière thermoplastique, puis à surmouler sur l'axe coudé les parties mobiles par rapport à l'axe en une seconde matière chimiquement incompatible par bi-injection.

Des matières thermoplastiques chimiquement incompatibles entre elles sont bien connues dans la technique et on peut citer, à titre d'exemples, PAG6 x%FV et POM, ABS ou ABS.PC et POM, PPx%FV et ABS ou ABS.PC. PAG6 signifie qu'il s'agit d'un polyamide 6, 6.6, 11 ou 12, x%FV signifiant la proportion en poids de la charge qui était à l'origine de la fibre de verre mais qui désigne maintenant une charge quelconque. PPx%FV signifie dans les mêmes conditions qu'il s'agit d'un polypropylène.

Il en résulte que grâce à ce procédé le problème des tolérances de montage est supprimé puisque les parties fixes et mobiles de l'ensemble d'articulation s'adaptent exactement l'une sur l'autre, la nature chimique des corps injectés empêchant tout accrochage et facilitant leur glissement relatif. On constitue ainsi un ensemble d'articulation solidaire avec des pièces parfaitement ajustées entre elles en une seule opération comprenant deux étapes. A cet effet, l'ensemble des pièces est injecté dans une machine d'injection comprenant deux vis permettant de mouler en bi-matière les différentes pièces qui constituent l'ensemble.

Selon une autre caractéristique de l'invention, on surmoule simultanément, sur l'axe coudé, la pièce supérieure constituant un palier d'articulation de l'écran sur l'axe et la pièce inférieure constituant un double clips de fixation sur la carrosserie. L'ensemble peut ainsi être enclipsé directement dans un trou prévu dans la carrosserie sans avoir à procéder à des vissages comme dans la technique antérieure. Le montage du pare-soleil est ainsi très simplifié. Le coût de fabrication d'un tel pare-soleil est également sensiblement réduit.

D'autres caractéristiques et avantages de l'invention apparaîtront au cours de la description qui va suivre de modes de réalisation donnés uniquement à titre d'exemples en regard des figures qui représentent:
- la figure 1, une vue en élévation d'un pare-soleil de la technique antérieure;
- la figure 2, une coupe selon la ligne II-II de la figure 1;
- la figure 3, représente en coupe, selon la ligne III-III de la figure 4, un ensemble d'articulation selon l'invention;
- la figure 4, une vue par dessus du même ensemble;
- la figure 5, une variante permettant de limiter le débattement de l'inclinaison du pare-soleil sur son axe selon un angle déterminé;
- la figure 6, une seconde variante de réalisation;
- la figure 7, un ensemble d'articulation permettant le passage de fils conducteurs électriques permettant l'éclairage du miroir de courtoisie.

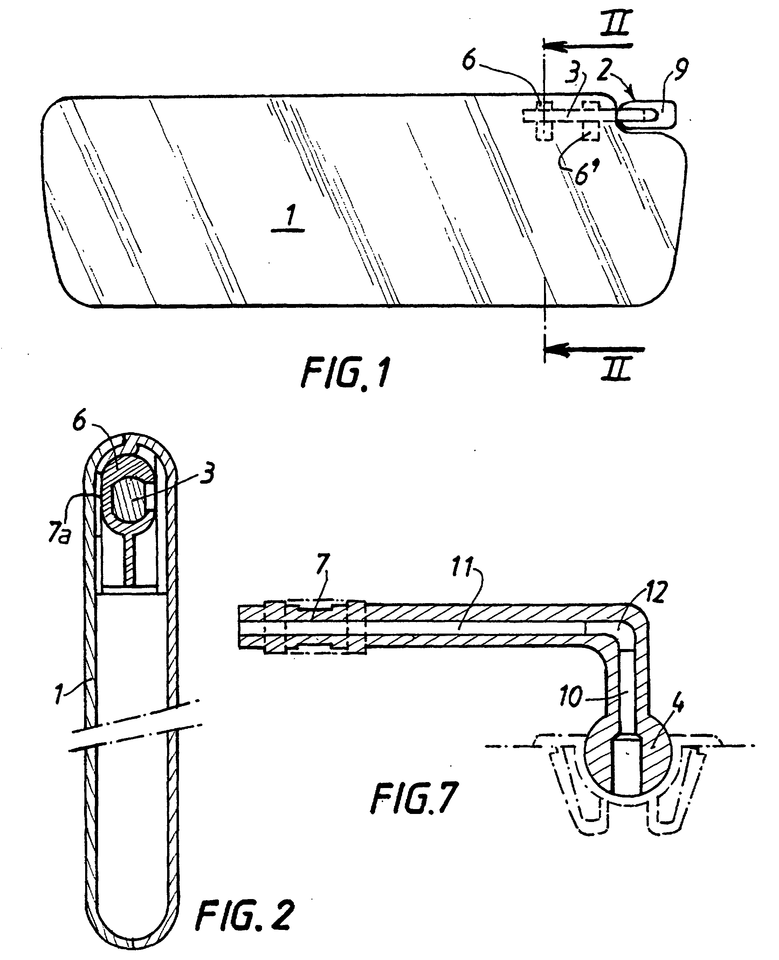

Sur la figure 1, on voit qu'un pare-soleil se compose essentiellement d'un écran 1 relié à la carrosserie par un ensemble d'articulation 2 comprenant un axe ou bras coudé 3 relié à l'écran 1 par une ou deux pattes paliers 6, 6'.

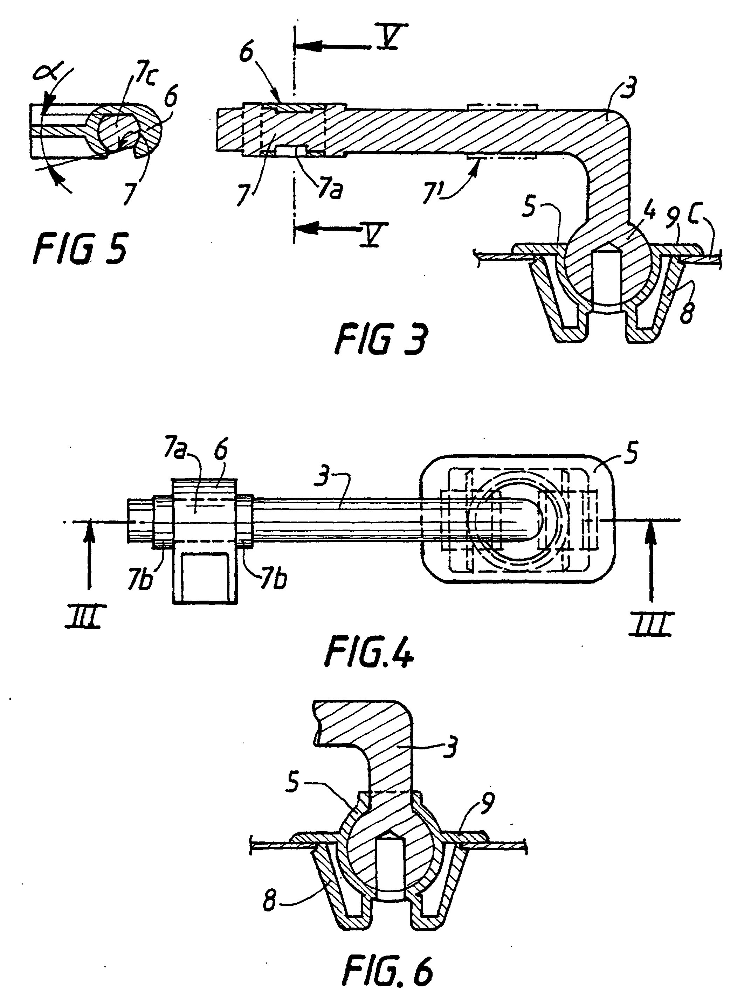

Comme cela apparaît sur la figure 3, l'ensemble d'articulation comprend, comme en soi connu, un axe coudé en « L » 3 dont la petite branche se termine par une rotule 4, mobile dans une embase 9 incluant un support de rotule 5. Une seconde articulation est constituée par un palier 7 autour duquel est mobile une patte d'articulation 6, reliée à l'écran 1 comme cela apparaît sur la figure 2. La première articulation 4, 5 permet le pivotement de l'axe 3 dans toutes les directions à partir du centre de la rotule. Dans l'exemple représenté, l'embase du support de rotule 5 se prolonge vers le bas par un double clips 8 qui permet sa fixation sur la carrosserie avec l'axe 3, le clips possédant des pattes élastiques 8 venant entourer les bords d'un trou découpé dans la carrosserie C et les maintenant fermement alors que le support de rotule se prolonge du côté intérieur de la carrosserie par une platine 9 constituant un masque de style.

La seconde articulation 6, 7 ne permet que la rotation de la patte 6 et par suite de l'écran 1 autour de l'axe 3. Elle comprend deux méplats 7a entourés, de part et d'autre, par des parties en saillie 7b, formant flasques de maintien latéral de la patte 6. De préférence, Les méplats 7a permettent de fixer la position du pare-brise selon deux positions opposées sur l'axe 3.

Dans un mode de réalisation particulier, les deux méplats 7a forment entre eux un angle a, ce qui permet, après rotation de l'écran 1 autour de l'axe 3 d'obtenir deux positions stables déterminées, comme représenté sur la figure 5, les positions intermédiaires étant obtenues par friction de la patte 6 sur la périphérie de l'axe 3.

L'ensemble à fabriquer comprend donc un axe d'articulation 3 qui est injecté dans un premier temps, un ensemble d'articulation à rotule 4,5 et un palier d'articulation ou deux paliers parallèles 7, 7', 6, 6'. Le support de rotule 5 et la (ou les) patte d'articulation 6 sont injectés, par surmoulage, dans la seconde étape du procédé sur l'axe 3 déjà formé.

Dans certains cas, il peut être utile, pour assurer une meilleure tenue mécanique, de prévoir un second palier d'articulation 7' qui est figuré en traits mixtes sur la figure 3 et qui est également moulé au cours de la première étape, une patte 6' étant surmoulée dans la seconde étape.

De même, lorsque l'on désire limiter le pivotement du pare-soleil, il est possible d'utiliser un support de rotule 5 tel que celui qui est représenté sur la figure 6. Dans ce cas, le support s'étend au-dessus de la platine 9 de manière à entourer complètement la rotule. A ce moment, l'axe 2 ne peut tourner qu'autour de l'axe de symétrie de la rotule et du bras.

La figure 7 représente un ensemble d'articulation selon l'invention permettant le passage de fils électriques nécessaires à l'alimentation d'un éclaireur de pare-soleil. L'injection plastique de cet axe se fait sur la rotule 4 et les trous nécessaires 10 et 11 sont réalisés partiellement par deux broches métalliques 10, 11 pilotées par des tiroirs hydrauliques. La continuité du trou entre les branches 10 et 11 est réalisée par insufflation de gaz permettant de réaliser une liaison en arc de cercle 12 facilitant le passage des fils. A cet effet, après injection de la matière plastique, la broche 10 est retirée avant polymérisation de la matière. A travers la broche 11, une aiguille est manoeuvrée pour laisser passer le gaz qui sera insufflé pour finaliser le conduit 12 du canal passe-fils. Il est ainsi possible d'obtenir un conduit creux avec un raccordement sensiblement circulaire qui facilite l'introduction ultérieure des fils électriques. Il est également possible de surmouler l'axe 3 sur les fils conducteurs au cours de la première étape du procédé.

On utilise dans la mise en oeuvre du procédé un moule rotatif et une presse bi-matières permettant de mouler les différentes pièces en commençant par le moulage de l'axe 3 suivi de l'ouverture du moule et sa rotation à 180° puis en surmoulant simultanément les pièces 5, 6, 6'.

Il va de soi que de nombreuses variantes peuvent être apportées, notamment par substitution de moyens techniques équivalents, sans sortir pour cela du cadre de l'invention.

## Revendications

1. Procédé de fabrication d'un ensemble d'articulation d'un pare-soleil comprenant un axe coudé (3) terminé à l'une de ses extrémités par une rotule (4) et un écran (1) articulé sur l'axe (3), **caractérisé en ce qu'**il consiste à mouler dans un premier temps, à l'aide d'un moule rotatif et d'une presse bi-matières, l'axe coudé (3) et au moins un palier (7) en une première matière thermoplastique, puis, après ouverture du moule suivie d'une rotation de 180°, à surmouler simultanément sur l'axe (3) les pièces (5,8) nécessaires au clipsage direct de l'articulation sur la carrosserie (C) et (6,6'), nécessaires à la liaison entre l'axe coudé (3) et l'écran (1) en une seconde matière, de retrait supérieur à la première, et chimiquement incompatible avec celle-ci.

2. Procédé de fabrication selon la revendication 1, **caractérisé en ce que**, au cours de l'injection de l'axe (3), des broches (10, 11) escamotables sont montées à l'intérieur de l'axe (3), la liaison entre les cavités formées par les broches (10,11) étant réalisée par une insufflation de gaz dans la région (12) après retrait de la broche (11).

3. Procédé selon la revendication 1, **caractérisé en ce que** l'on forme sur l'axe (3) deux paliers (7,7') parallèles.

4. Procédé selon la revendication 1, **caractérisé en ce que** le support de rotule (5) entoure complètement la rotule (4).

5. Procédé selon la revendication 1 ou 3, **caractérisé en ce que** le palier (7) comporte deux méplats (7a) inclinés d'un angle (α) l'un par rapport à l'autre.

6. Pare-soleil muni d'un ensemble d'articulation, obtenu en une seule fois, par le procédé selon l'une des revendications 1 à 5.

## Patentansprüche

1. Verfahren zur Herstellung einer Gelenkanordnung einer Sonnenblende mit einer abgeknickten Achse (3), die an einem Ende mit einem Kugelgelenk (4) endet und mit einer mit der Achse (3) gelenkig verbundenen Blende (1), **dadurch gekennzeichnet, dass** zunächst, mit Hilfe einer Drehform und einer Zweimaterienpresse, die abgeknickte Achse (3) und mindestens ein Lager (7) aus einem ersten Thermoplast geformt werden, danach, nach Öffnung der Form, gefolgt von einer Drehung um 180°, gleichzeitig auf die Achse (3) die Teile (5, 8) geformt werden, die zum direkten Aufclipsen der Gelenkanordnung auf die Karrosserie (C) und (6, 6') zur Verbindung zwischen der abgeknickten Achse (3) und der Blende (1) notwendig sind, aus einem zweiten Stoff, stärker schrumpfend als der erste, und der mit diesem chemisch nicht kompatibel ist.

2. Herstellungsverfahren gemäss Anspruch 1, **dadurch gekennzeichnet, dass** während der Spritzung der Achse (3), entfernbare Stifte (10, 11) ins Innere der Achse (3) eingefügt werden, wobei die Verbindung zwischen den durch die Stifte (10, 11) geformten Hohlräumen durch Einblasen von Gaz in die Zone (12), nach Entfernung des Stifts (11), hergestellt wird.

3. Verfahren gemäss Anspruch 1, **dadurch gekennzeichnet, dass** auf der Achse (3) zwei parallele Lager (7, 7') geformt werden.

4. Verfahren gemäss Anspruch 1, **dadurch gekennzeichnet, dass** der Kugelgelenkträger (5) das Kugelgelenk (4) vollständig umfasst.

5. Verfahren gemäss Anspruch 1 oder 3, **dadurch gekennzeichnet, dass** das Lager (7) zwei Abflachungen (7a) aufweist, die unter einem Winkel (α) gegeneinander geneigt sind.

6. Sonnenblende mit einer Gelenkanordnung, auf ein einziges Mal erhalten, gemäss dem Verfahren nach einem der Ansprüche 1 bis 5.

## Claims

1. Method for manufacturing a joint assembly of a sun visor comprising a bent shaft (3) that is terminated, at one of its ends, by a ball and socket joint (4) and a screen (1) that is articulated onto the shaft (3), **characterized in that** it consists in moulding, in a first time, by means of a rotary mould and a bi-material press, the bent shaft (3) and at least one bearing (7) of a first thermoplastic material, then, after having opened the mould followed by a rotation by 180°, overmoulding simultaneously on the shaft (3) the parts (5, 8) that are necessary for a direct engagement of the joint assembly on the car body (C) and (6,6') that are necessary for the connection between the bent shaft (3) and the screen (1) of a second material, having a shrinkage greater than that of the first one, and chemically incompatible therewith.

2. Manufacturing method according to claim 1, **characterized in that**, during injection of the shaft (3), retractable spindles (10, 11) are mounted within the shaft (3), the connection between the chambers provided by the spindles (10, 11) being made by a blowing of gas in the area (12) after withdrawal of the spindle (11).

3. Method according to claim 1, **characterized in that** two parallel bearings (7,7') are formed onto the shaft (3).

4. Method according to claim 1, **characterized in that** the ball and socket joint support (5) surrounds completely the ball and socket joint (4).

5. Method according to claim 1 or 3, **characterized in that** the bearing (7) comprises two flat surfaces (7a) that are sloped by an angle (α) one with respect to the other.

6. Sun visor provided with a joint assembly, made in a single time, by the method according to one of claims 1 to 5.
